# EUROPÄISCHE PATENTSCHRIFT

(11) **EP 2 861 873 B1**
(45) Veröffentlichungstag und Bekanntmachung des Hinweises auf die Patenterteilung: **01.03.2017**
(21) Anmeldenummer: 13783233.3
(22) Anmeldetag: 13.06.2013
(51) Int. Cl.: F16B 7/18, F24J 2/52, F16B 7/04, F16B 2/12, F16B 2/02

(54) **HALTER FÜR EINE PROFILSCHIENE**
HOLDER FOR A PROFILED RAIL
SUPPORT POUR RAIL PROFILÉ

(30) Priorität: 13.06.2012 DE 202012005714 U
(43) Veröffentlichungstag der Anmeldung: 22.04.2015
(73) Patentinhaber: Schletter GmbH, 83527 Kirchdorf (DE)
(72) Erfinder: URBAN, Hans, 83527 Haag (DE); FLUHRER, Dieter, 84437 Reichertsheim (DE)
(74) Vertreter: Thum, Bernhard
(86) Internationale Anmeldenummer: PCT/DE2013/000315
(87) Internationale Veröffentlichungsnummer: WO 2013/185747

(56) Entgegenhaltungen:
- EP-A2- 2 249 102
- EP-A2- 2 256 353
- FR-A1- 2 950 375

## Beschreibung

Die Erfindung betrifft einen Halter für eine Profilschiene.

Aus EP 2 009 293 A2 ist ein Halter für eine Profilschiene mit einem Halterand bekannt. Der Halter umfasst einen Grundkörper, einen Klemmkeil und eine Schraubverbindung. Der Grundkörper weist eine Auflagefläche für die Profilschiene, eine von der Auflagefläche abstehende Niederhalteleiste und eine schiefe Rampe auf. Der Klemmkeil ist auf der Rampe angeordnet und wird mit einem Gummiring in eine offenen Position gezogen. Der Klemmkeil und die Rampe werden von der Schraubverbindung durchdrungen, wobei in dem Klemmkeil ein Rundloch und in der Rampe ein Langloch enthalten ist. Die Schraubenverbindung umfasst eine Kopfschraube und eine Mutter. Bei Betätigung der Schraubenverbindung verschiebt der Klemmkeil die Profilschiene parallel auf der Auflagefläche bis der Halterand unter die Niederhalteleiste gelangt und an dieser anschlägt. Der Halter ist mittels der Schraubverbindung zugleich gegen ein Trägerbauteil geklemmt, wobei die Mutter in einer Öffnung des Trägerbauteils angeordnet ist. Bei einem Festziehen der Schraube kann es vorkommen, dass der Grundkörper sich auf dem Trägerbauteil aus seiner ursprünglichen Montageposition unerwünscht verschiebt. Die Montage des Gummirings ist maschinell aufwändig. Als Hauptnachteil wird angesehen, dass die Mutter vor dem Aufsetzen des Halters auf das Trägerbauteil in einem vorherigen Schritt in die Öffnung des Trägerbauteils einzusetzen ist. Der Halter und die Mutter sind dadurch separat vorzuhalten.

EP 2 249 102 A2 offenbart einen Halter für eine Profilschiene entsprechend dem Oberbegriff von Anspruch 1.

Aufgabe der Erfindung ist es, zu dem bekannten Halter eine alternative Lösung bereitzustellen. Der Halter soll maschinell einfach zu fertigen sein und sich einfach und schnell montieren lassen und die Profilschiene fest und dauerhaft halten.

Die Aufgabe wird mit der in Anspruch 1 angegebenen Vorrichtung gelöst. Demgemäß ist der Halter für eine Profilschiene vorgesehen, das heißt genauer zum Festklemmen dieser Profilschiene. Der Halter weist einen Grundkörper, ein Klemmelement und eine Schraubverbindung auf. Der Grundkörper weist eine Auflagefläche auf, die zum Auflegen der Profilschiene vorgesehen ist. Weiter weist der Grundkörper eine Niederhalteleiste auf, die zum Niederhalten eines Halterands der Profilschiene gegen die Auflagefläche vorgesehen ist. Außerdem enthält der Grundkörper eine erste Öffnung, und das Klemmelement enthält eine zweite Öffnung. Die Schraubverbindung führt durch die zweite und die erste Öffnung und ist an einem Trägerbauteil fixierbar. Das Klemmelement kann die Profilschiene mittels der Schraubverbindung gegen den Grundkörper klemmen. Charakteristisch für die Erfindung ist, dass der Halter ein Drehgelenk aufweist und eine Drehachse des Drehgelenks parallel zu der Auflagefläche verläuft. Wesentlich ist außerdem, dass das Klemmelement zwischen einer offenen Schwenkposition und einer geschlossenen Schwenkposition mittels des Drehgelenks an dem Grundkörper radial zu der Drehachse geführt ist. Vorzugsweise wird das Klemmelement mittels des Drehgelenks bezüglich der Drehachse nicht nur radial geführt, sondern auch radial gehalten. Dadurch kann sich das Klemmelement nicht mehr ohne weiteres von dem Grundkörper radial lösen, was insbesondere in der Fertigung von Vorteil ist. In der offenen Schwenkposition kann die Profilschiene auf die Auflagefläche aufgelegt werden. In der geschlossenen Schwenkposition kann der Halterand im Eingriff mit der Niederhalteleiste stehen und die Profilschiene fest gegen den Grundkörper, insbesondere gegen seine Niederhalteleiste geklemmt sein. Der Halter bietet Vorteile hinsichtlich Fertigung, Montage und Festigkeit und eignet für Profilschienen mit unterschiedlichem Querschnitt.

Das Drehgelenk kann aus mehreren, insbesondere zwei Drehgelenkpartnern zusammengesetzt sein, wobei einer der Drehgelenkpartner an dem Grundkörper und der andere Gelenkpartner an dem Klemmelement vorgesehen ist. Die Drehgelenkpartner können integraler Bestandteil des Grundkörpers und des Klemmelements sein. Wesentlich ist, dass die Drehgelenkpartner parallel zu der Niederhalteleiste sind. Vorzugsweise ist einer der Drehgelenkpartner konkav und der andere Drehgelenkpartner konvex geformt. Der konkave Drehgelenkpartner kann insbesondere abschnittsweise eine hohlzylindrische Aufnahme für den konvexen Drehgelenkpartner sein, wobei der konvexe Drehgelenkpartner abschnittsweise eine zylindrische Gestalt aufweisen kann. Es versteht sich das der konkave und der konvexe Drehgelenkpartner zum Zweck der Drehführung korrespondierend geformt sind und ein Lagerspiel aufweisen können. Denkbar sind auch nicht von Hohlzylindern und Zylindern abweichende Formen, die bei einem Schwenken des Klemmelements zusätzlich eine Translation erzwingen, insbesondere in einer zur Auflagefläche parallelen und zur Halteleiste weisenden Richtung.

Das Drehgelenk kann mittels eines biegsamen Streifens gebildet sein, wobei der biegsame Streifen an einem Ende an dem Grundkörper und an einem anderen Ende an dem Klemmelement fixiert ist. Der biegsame Streifen kann in Richtung der Drehachse eine größere Dimension einnehmen als quer dazu, das bedeutet der Länge nach biegbar sein. Der biegsame Streifen kann eine Sollknickstelle aufweisen, die die Drehachse bestimmt. Eine solche Sollknickstelle kann durch eine Schwächung in der Materialstärke des biegsamen Streifens erkennbar sein. Ein mittels eines biegsamen Streifens ausgeführtes Drehgelenk kann ein sogenanntes Filmscharnier sein.

Bei einer Draufsicht auf die Auflagefläche oder mit anderen Worten bei einer senkrechten Projektion auf die Auflagefläche kann die erste Öffnung zwischen der Niederhalteleiste und der Drehachse angeordnet sein. Das bedeutet, dass bei einer Draufsicht auf die Auflagefläche die Drehachse auf einer der Niederhalteleiste abgewandten Seite der ersten Öffnung angeordnet ist. Die von der Halteleiste abgewandte Seite der ersten Öffnung ist bezüglich der Draufsicht diejenige Seite der ersten Öffnung mit dem größten Abstand zur Niederhalteleiste. Diese Anordnung spart Bauraum und bietet Vorteile hinsichtlich der Festigkeit.

Die Drehachse kann zwischen einer mit der Auflagefläche zusammenfallenden erste Ebene und einer dazu parallelen zweiten Ebene verlaufen, wobei ein Abstand zwischen der ersten Ebene und der zweiten Ebenen kleiner oder gleich als das Zweifache des größten Abstands der Niederhalteleiste von der Auflagefläche. Mit anderen Worten ist der Lotabstand der Drehachse zu der Auflagefläche kleiner als das Zweifache des größten Lotabstandes der Niederhalteleiste zu der Auflagefläche. Hierdurch ergeben sich kurze Abstände von der Auflagefläche zur Drehachse, was Vorteile hinsichtlich der Materialbeanspruchung bieten kann. Vorzugsweise beträgt der Abstand zwischen der ersten Ebene und der zweiten Ebenen weniger als das Einfache des größten Abstands der Niederhalteleiste von der Auflagefläche. Bei geeigneter Gestaltung des Drehgelenks kann sich die zweite Ebene auch auf einer der Auflagefläche abgewandten Seite befinden. Es ist jedoch bevorzugt, wenn sich die Drehachse auf derselben Seite der Auflagefläche befindet, auf der auch die Halteleiste angeordnet ist. Es versteht sich, dass die Drehachse auch genau in der ersten Ebene liegen kann. Die Drehachse kann auch in einer dritten Ebene liegen, die zu der Auflagefläche parallel ist und die Niederhalteleiste schneidet.

An dem Grundkörper kann mindestens ein Drehanschlag vorgesehen sein, die einen Schwenkbereich des Klemmelements relativ zu dem Grundkörper begrenzt. Es kann ein Drehanschlag in öffnender Drehrichtung und ein Drehanschlag in schließender Drehrichtung vorgesehen sein. Solche Drehanschläge können an einem Drehgelenkpartner des Grundkörpers angeordnet sein. Auch der weiter unten beschriebene Gegenhalter kann zugleich als Drehanschlag in schließender Drehrichtung wirken. Ein Schwenkbereich zwischen 10 und 40 Grad, vorzugsweise zwischen 15 und 30 Grad hat sich als vorteilhaft erwiesen.

Der Halter kann eine mechanische Hemmeinrichtung enthalten, die das Klemmelement an einer Drehung aus der offenen Schwenkposition in die geschlossene Schwenkposition hemmt. Die mechanische Hemmeinrichtung kann insbesondere ein irreversibel verformbarer Anschlag sein, an dem das Klemmelement anliegt oder mittels dem sich das Klemmelement gegen den Grundkörper abstützt. Die mechanische Hemmeinrichtung kann außerdem eine Rasteinrichtung sein, die durch Handkraft oder zumindest durch Betätigung der Schraubverbindung überwindbar ist. Eine solche Rasteinrichtung kann aus einer Rastvertiefung und einem dort eingreifenden Rastfortsatz bestehen und bevorzugt direkt zwischen den Drehgelenkpartner des Drehgelenks wirken. Die mechanische Hemmeinrichtung erlaubt ein einfaches Auflegen der Profilschienen auf die Auflagefläche.

Der Halter enthält erfindungsgemäß ein elastisches Mittel, das das Klemmelement in eine Richtung zu der offenen Schwenkposition drängt. Das Drängen kann durch Ziehen oder bevorzugt durch Drücken erfolgen. Das elastische Mittel wirkt bevorzugt zwischen Klemmelement und Grundkörper. Das elastische Mittel kann räumlich zwischen dem Grundkörper und dem Klemmelement angeordnet sein. Das elastische Mittel kann ein Gummikörper sein, der während des Drehens in die geschlossene Schwenkposition komprimiert wird. Ein solcher Gummikörper kann beispielsweise einen einen runden, ovalen oder dreieckigen Querschnitt aufweisen und eine Ausnehmung enthalten. Das elastische Mittel kann auch eine gebogenen Blattfeder sein, die mit einem Schenkel an dem Grundkörper und mit einem anderen Schenkel an dem Klemmelement angreift. Das elastische Mittel kann auch eine Drehfeder sein, die mit einem Schenkel der an dem Grundkörper und mit einem anderen Schenkel der an dem Klemmelement angreift. Solche Blatt- oder Drehfedern bestehen bevorzugt aus Federstahl. Das elastische Mittel erlaubt ein einfaches Auflegen der Profilschiene und bewirkt zudem, dass ein eventuell vor dem Auflegen der Profilschiene bereits niedergeschwenktes Klemmelement selbsttätig wieder in Richtung zu der offenen Schwenkposition gedrängt wird. Es ist auch möglich, das Drehgelenk und das elastische Mittel miteinander zu kombinieren, beispielsweise mit einer vorgebogenen Blattfeder, die an einem Ende in dem Grundkörper und an dem anderen Ende in dem Klemmelements steckt.

Das Klemmelement kann einen konvexen Abschnitt aufweisen, an dem die Schraubverbindung radial angreifen kann, das heißt die Achse der Schraubverbindung ist radial zu dem konvexen Abschnitt. Der konvexe Abschnitt ist an von der ersten Öffnung abgewandten Oberseite des Klemmelements vorgesehen. So kann ein Bestandteil der Schraubenverbindung, insbesondere ein Schraubenkopf oder eine Mutter mit einer geraden Angriffsfläche tangential an dem konvexen Abschnitt anliegen. Dabei ist von Vorteil, dass die Schraubverbindung axial belastet wird und keine unerwünschten Querkräfte oder Biegemomente entstehen, welche die Montage behindern oder die Festigkeit beeinträchtigen könnten. Der konvexen Abschnitt ist vorzugsweise so gestaltet, dass dort die Schraubverbindung über den gesamten Schwenkbereich des Klemmelements radial angreifen kann, zumindest jedoch im Bereich der geschlossenen Schwenkposition. Der konvexe Abschnitt kann in der Richtung parallel zu der Drehachse gerade oder ebenfalls gewölbt sein. Der konvexe Abschnitt ist vorzugsweise um die zweite Öffnung angeordnet. Das Klemmelement kann ein Stirnende aufweisen; das zur Anlage an die Profilschiene vorgesehen ist. Das Stirnende ist vorzugsweise nicht nur zur Anlage an die Profilschiene vorgesehen, sondern zum Beaufschlagen der Profilschiene gegen die Niederhalteleiste, insbesondere in einer zur Auflagefläche parallelen Richtung. Das Stirnende kann einen konvex gerundeten Gleitbereich aufweisen, das bei einem Niederschwenken des Klemmelements an der Profilschiene gleiten kann. Der konvex gerundete Gleitbereich kann das Auflegen der Profilschiene erleichtern und wirkt als Fügehilfe. So kann der konvex gerundete Gleitbereich das Niederschwenken des Klemmelements erleichtern und Riefen an der Profilschiene vermieden.

Das Stirnende kann alternativ oder ergänzend eine Anlagebereich aufweisen, der in der geschlossenen Schwenkposition senkrecht zu der Auflagefläche ist. Der Anlagebereich kann Bestandteil der konvex gerundeten Gleitbereichs sein. Der Anlagebereich kann auch plan sein und an dem konvex gerundeten Gleitbereich angrenzen, insbesondere tangential oder anderweitig stetig in diesen übergehen. Der Anlagebereich ist derjenige Abschnitt des Stirnendes der in der geschlossenen Schwenkposition an der Profilschiene unmittelbar und wirksam anliegen kann. Der Anlagebereich kann die Profilschiene gegen die Niederhalteleiste unmittelbar beaufschlagen bzw. klemmen, insbesondere in einer zur Auflagefläche parallelen Richtung.

Das Klemmelement kann einen Fixierung aufweist, das die Schraubenverbindung bei einem Niederschwenken des Klemmelements mitführt. Dies spart einen Montageschritt und machte die Montage angenehmer. Besonders vorteilhaft ist eine solche Fixierung, wenn die Schraubenverbindung das weiter unter noch beschriebene erste Ankerelement enthält. Die Fixierung kann ein einfacher Niederhalter für einen Schraubenkopf oder eine Mutter sein, der an dem Stirnende des Klemmelements mit angeformt sein kann.

Der Grundkörper kann einen Gegenhalter aufweisen, mittels dem das Klemmelement entgegen einer Klemmrichtung abstützbar ist, wobei das Klemmelement erst bei einem Niederschwenken des Klemmelements in Anlage mit dem Gegenhalter gelangt. Die Klemmrichtung vorzugsweise parallel zu der Auflagefläche und von der Niederhalteleiste wegweisend. Der Gegenhalter kann als Eintiefung in dem Grundkörper enthalten sein oder wie die Halteleiste von diesem abstehen. Der Gegenhalter kann wie die Niederhalteleiste linear gestaltet sein, beispielsweise als Nut oder Leiste, und parallel zur Niederhalteleiste verlaufen. Der Gegenhalter kann an dem Grundkörper integral vorgesehen sein. Wesentlich ist, dass der Gegenhalter einer Translation des Klemmelements gegen die Klemmrichtung blockiert oder zumindest hemmt. Dadurch kann das Drehgelenk entlastet werden. Der Gegenhalter ist vorzugsweise starr ausgeführt und räumlich zwischen der Halteleiste und der ersten Öffnung angeordnet. Vorzugsweise ist an dem Gegenhalter und/oder dem Klemmelement eine Fügeschräge vorgesehen. Eine solche Fügeschräge gestattet größere Formtoleranzen und erleichtert das Niederschwenken des Klemmelements.

Das Klemmelement kann einen Fortsatz aufweisen, der mit dem Gegenhalter bei einem Niederschwenken des Klemmelements in Anlage gelangt. Der Fortsatz kann mit dem Gegenhalter auf einer der Niederhalteleiste zugewandten Seite des Gegenhalters zur Anlage gelangen. Das zuvor beschriebenen Stirnende des Klemmhalters kann als ein solcher Fortsatz geformt sein. Alternativ kann vorgesehen sein, dass das Klemmelement einen Vertiefung aufweist, in welche der Gegenhalter bei einem Niederschenken des Klemmelements in Eingriff gelangt.

An dem Gegenhalter und/oder an dem Klemmelement kann eine Spannschräge vorgesehen sein, die das Klemmelement bei einem Niederschwenken in die Klemmrichtung zwingt. Dazu ist es zweckmäßig, wenn das Drehgelenk ein radiales Spiel aufweist. Diese Maßnahme kann die Festigkeit der Klemmverbindung erhöhen und Weg des Kraftflusses durch den Grundkörper verkürzen, insbesondere wenn der Gegenhalter zwischen der ersten Öffnung und der Niederhalteleiste vorgesehen ist.

Das Klemmelement kann winklig ausgeführt sein dergestalt, dass zwischen der ersten Öffnung und der zweiten Öffnung ein Zwischenraum gebildet ist. Das Klemmelement kann insbesondere rechtwinklig ausgeführt sein. Vorzugsweise ist in der geschlossenen Schwenkposition ein senkrechter Abschnitt im Wesentlichen senkrecht und ein paralleler Abschnitt im Wesentlichen parallel zur Auflagefläche vorgesehen. Der parallele Abschnitt kann die zweite Öffnung und den konvexen Abschnitt aufweisen. Der Zwischenraum kann als Bauraum für weitere Elemente des Halters genutzt werden, insbesondere für das elastische Mittel und ein weiter unten beschriebenes erstes Ankerelement.

Die Schraubverbindung kann in einem einfachen Fall eine Schraube und eine Mutter aufweisen. Die Mutter kann zum Einsetzen in eine Öffnung des Trägerbauteils vorgesehen sein. Die Schraube ist bevorzugt eine Kopfschraube, die am Klemmelement angreift. Die Mutter befindet sich auf der Seite der Rückfläche des Grundkörpers. Das Einsetzen der Mutter kann durch Einschieben, Einschwenken, Eindrehen oder einer Kombination daraus erfolgen. Die Mutter auch eine sogenannte Hammerkopfmuttter oder Rhombusmutter sein.

Alternativ kann die Schraubverbindung einen Gewindeschaft und eine Mutter aufweisen. Der Gewindeschaft kann an einem Trägerbauteil befestigt sein. Die Mutter kann insbesondere eine Hülsenmutter sein und am Klemmelement angreifen. Außerdem kann vorgesehen sein, dass die Schraubverbindung lediglich einen Gewindeschaft und eine Mutter aufweist. Der Gewindeschaft kann unmittelbar an dem Trägerbauteil befestigt sein. Die Mutter kann insbesondere eine Hülsenmutter sein und an dem Klemmelement angreifen.

Die Schraubverbindung kann eine Schraube und ein erstes Ankerelement aufweisen, wobei das Ankerelement zwei entgegengesetzt nach außen gerichtete Schnapphaken aufweist zum Hintergreifen einer Öffnung in dem Trägerbauteil, und das Ankerelement ein Innengewindemittel aufweist, mit dem die Schraube im Gewindeeingriff steht. Wesentlicher Vorteil einer solchen Schraubverbindung ist, dass der Halter im Gegensatz zum Stand der Technik komplett vormontierbar ist. Außerdem erübrigt sich ein getrenntes Vorhalten einer Mutter und ein vorheriges Einsetzen derselben in eine Öffnung im Trägerbauteil. Die Öffnung in dem Trägerbauteil kann insbesondere ein hintergreifbarer Schlitz. Besonders bevorzugt ist es, wenn das Trägerbauteil eine Tragschiene ist und die Öffnung einen in der Tragschiene enthaltene hinterschnittenen Nut, die hinterschnitten ist. Die Schnapphaken können außen Einführschrägen aufweisen, zum einfacheren Einführen in die Öffnung. Das erste Ankerelement weist im Bereich des Innengewindemittels bevorzugt einen quadratischen Außenquerschnitt auf.

Dass Innengewindemittel kann als Innengewinde in dem ersten Ankerelement integral vorgesehen sein. Besonders vorteilhaft ist es hierzu, die Schraube mit einem selbstschneidenden Gewinde auszustatten, sodass das Innengewinde in einem Arbeitsgang zusammen mit dem Einschrauben der Schraube erstellt werden kann. Außerdem ist es möglich, dass das Innengewindemittel in einer Ausführungsform als Mutter in dem Ankerelement aufgenommen ist. Hierzu kann das Ankerelement eine Aufnahme für die Mutter aufweisen, in der die Mutter zugleich verdrehsicher aufgenommen ist.

Die Schraube kann als Gegenhalter für die Schnapphaken wirken, indem sie beim Anziehen zwischen die Schnapphaken gelangt und ein Zueinanderbewegen blockiert. Das erste Ankerelement kann in der ersten Öffnung des Grundkörpers verdrehsicher aufgenommen ist. Vorzugsweise weist die erste Öffnung dazu einen rechteckigen, insbesondere einen quadratischen Querschnitt auf.

Der Grundkörper kann einen Fortsatz aufweisen, der von der Rückfläche absteht und zur Verdrehsicherung des Grundkörpers mit dem Trägerbauteil zusammenwirken kann. Der Fortsatz kann in dieselbe Öffnung des Trägerbauteils eingreifen wie auch die Schraubverbindung.

Der Grundkörper kann eine Rückseite aufweisen, die von der Auflagefläche abgewandt ist. Es kann ein zweites Ankerelemente vorgesehen sein, das von der Rückfläche absteht und zum Hintergreifen einer Öffnung in dem Trägerbauteil vorgesehen ist. Durch das zweite Ankerelement erhöht sich die Festigkeit der Befestigung des Halters an dem Trägerbauteil. Das zweite Ankerelement kann beispielsweise L-förmig oder bevorzugt T-förmige sein und an dem Grundkörper befestigt sein. Das zweite Ankerelement greift vorzugsweise in dieselbe Öffnung wie die Schraubverbindung, insbesondere das Ankerelement. Die Öffnung in dem Trägerbauteil kann dazu ein hintergreifbarer Schlitz sein. Das zweite Ankerelement kann zugleich Drehmoment ableiten beziehungsweise als Verdrehsicherung wirken.

Der Grundkörper, das Klemmelement und das Drehgelenk können zusammen integral ausgeführt sein. So ist es beispielsweise denkbar, dass der Grundkörper und das Klemmelement einschließlich des Drehgelenks aus einem einzigen Umformteil aus Metall oder aus einem einzigen Spritzgussteil aus Kunststoff bestehen.

Der Grundkörper, das Klemmelement und/oder ein Bestandteil der Schraubverbindung können jeweils homogen einstückig ausgeführt sein. Ein solches Bestandteil der Schraubverbindung kann das weiter unten beschriebene erste Ankerelement sein.

Der Grundkörper, das Klemmelement und/oder ein Teil der Schraubverbindung können jeweils eine extrudierbare Grundform aufweisen. Extrudierbar bedeutet zylindrisch im geometrisch allgemeinen Sinn. Dadurch können der Grundkörper, das Klemmelement und/oder Bestandteil der Schraubverbindung durch Abtrennung von einem extrudierten Strang bereits in ihrer Grundform hergestellt werden. Die extrudierbare Grundform unterscheidet sich von der tatsächlichen Gestalt im Wesentlichen durch Öffnungen, die quer zu einer Extrusionsrichtung der extrudierbaren Grundform eingebracht sind. Das Bestandteil der Schraubverbindung kann das weiter unten beschriebene erste Ankerelement sein.

Offenbart wird auch ein Montagesystem mit dem Halter und der Profilschiene Die Profilschiene kann eine ein- oder beidseitig hinterschnittene Nut aufweisen, deren hintergreifbarer Rand der Halterand für die Niederhalteleiste ist. Alternativ oder ergänzend kann die Profilschiene einen bezüglich der Profilschiene nach außen gerichteten Halterand aufweisen. Es ist jedoch bevorzugt, wenn die Profilschiene frei von einem von der Profilschiene abstehenden Halterand ist.

Das Montagsystem kann das Trägerbauteil enthalten. Das Trägerbauteil kann einen abstehenden Gewindezapfen aufweisen, der Bestandteil der Schraubverbindung ist. Zusätzlich zum abstehenden Gewindezapfen kann die Schraubverbindung eine Mutter, insbesondere eine Hülsenmutter enthalten, die an dem Klemmelement angreift. Das Trägerbauteil kann eine Öffnung enthalten, an der die Schraubverbindung fixierbar ist. Die Öffnung kann beispielsweise ein Innengewinde oder eine hintergreifbare Öffnung, insbesondere eine Längsöffnung sein. Besonders bevorzugt ist es, wenn das Trägerbauteil ein Tragschiene ist, die als Öffnung eine hinterschnittenen Nut enthält.

Offenbart wird auch ein Montageverfahren zum Vorfixieren des Halters an einem Trägerbauteil mit einer hintergreifbaren Öffnung. Es ist durch folgende Schritt gekennzeichnet: a) Aufsetzen des Halters auf das Trägerbauteil dergestalt, dass das erste Ankerelement in die hintergreifbare Öffnung ragt, und b) Niederschwenken des Klemmelements mit Eindrücken des ersten Ankerelements in die hintergreifbare Öffnung. Das Eindrücken erfolgt soweit, bis das erste Ankerelement die hintergreifbare Öffnung hintergreift. Zum gleichzeitigen Niederschwenken des Klemmelements und Eindrücken den Ankerelements ist vorzugsweise der vorgenannte Niederhalter für die Schraubverbindung vorgesehen.

Die Erfindung betrifft auch ein Montageverfahren gemäß Anspruch 13. Das Eindrücken erfolgt soweit, bis das erste Ankerelement die hintergreifbare Öffnung hintergreift. Zum gleichzeitigen Niederschwenken des Klemmelements und Eindrücken den Ankerelements ist vorzugsweise der vorgenannte Niederhalter für die Schraubverbindung vorgesehen.

Die vorstehenden Montageverfahren sind zweckmäßig dadurch ergänzt, dass nach dem Niederschwenken das Klemmelement durch das elastische Mittel selbstätig aufschwenkt, das heißt wieder in eine offenen Schwenkposition gelangt.

Offenbart wird auch ein Montageverfahren zum Befestigen der Profilschiene mit einem Halterand an dem Halter. Es ist durch die folgenden Schritte gekennzeichnet: a) Auflegen der Profilschiene auf die Auflagefläche, wobei der Halterand und die Niederhalteleiste in Gegenüberlage gelangen und b) Anziehen der Schraubverbindung, wodurch das Klemmelement niedergeschwenkt wird die Profilschiene mittels des Klemmelements gegen den Grundkörper, insbesondere gegen die Niederhalteleiste geklemmt wird. Vorzugsweise gelangt während oder noch vor dem Schritt b) der Halterand in Eingriff mit der Niederhalteleiste. Dieses Montageverfahren kann sich an die vorstehenden Verfahren zum Vorfixeren des Halters anschließen, wodurch der Halter zugleich an dem Trägerbauteil festgeklemmt wird.

Offenbart wird auch eine Anordnung mit einem Halter und einer Profilschiene mit einem Halterand, wobei die Profilschiene auf die Auflagefläche des Halters aufgelegt ist, und der Halterand der Profilschiene gegen die Auflagefläche niedergehalten ist, und die Profilschiene mittels des Klemmelements gegen den Grundkörper geklemmt ist.

Offenbart wird auch eine Anordnung mit einem Halter und einem Trägerbauteil, wobei der Halter mittels der Schraubverbindung an dem Trägerbauteil vorfixiert ist.

Offenbart wird auch eine Kreuzverbindung zwischen der Profilschiene und der Tragschiene mittels des Halters, wobei der Halter an seiner Rückfläche auf der Tragschiene aufliegt und das erste Ankerelement und ggf. das zweite Ankerelement die hinterschnittenen Nut der Tragschiene hintergreifen.

Der Halter eignet sich besonders für Profilschienen, die keinen nach außen gerichteten Halterand aufweisen oder die an der zur Auflagefläche senkrechten Seite keine hinterschnitttene Nut enthalten. Vorzugsweise wird der Halter für Profilschienen verwendet, die einen rechteckigen Grundquerschnitt aufweisen und ausschließlich an zwei einander abgewandten Seiten hinterschnittene Nuten aufweist, wobei eine Nut zur Auflageseite des Grundkörpers gerichtet wird. Liegt ein nach außen gerichteter Halterand vor, kann das Klemmelement den Halterand alternativ, bevorzugt jedoch ergänzend senkrecht gegen die Auflagefläche drücken.

Nachfolgend wird die Erfindung anhand von Zeichnungen näher erläutert. Es zeigen:
**Fig. 1** bis **Fig. 3** einen Halter mit einem Klemmelement in offenen Schwenkposition,
**Fig. 4** den Halter gemäß **Fig. 1** mit dem Klemmelement in geschlossener Schwenkposition,
**Fig. 5** bis **Fig. 8** mehrere Montageschritte einer Anordnung mit dem Halter gemäß **Fig. 1****,**
**Fig. 9** eine Rückansicht der Anordnung gemäß **Fig. 8****,**
**Fig. 10** bis **Fig. 15** mehrere Montageschritte einer Anordnung mit dem Halter gemäß **Fig. 1****,**
**Fig. 16** und **Fig. 17** zwei Explosionsansichten der Anordnung gemäß **Fig. 15****.**

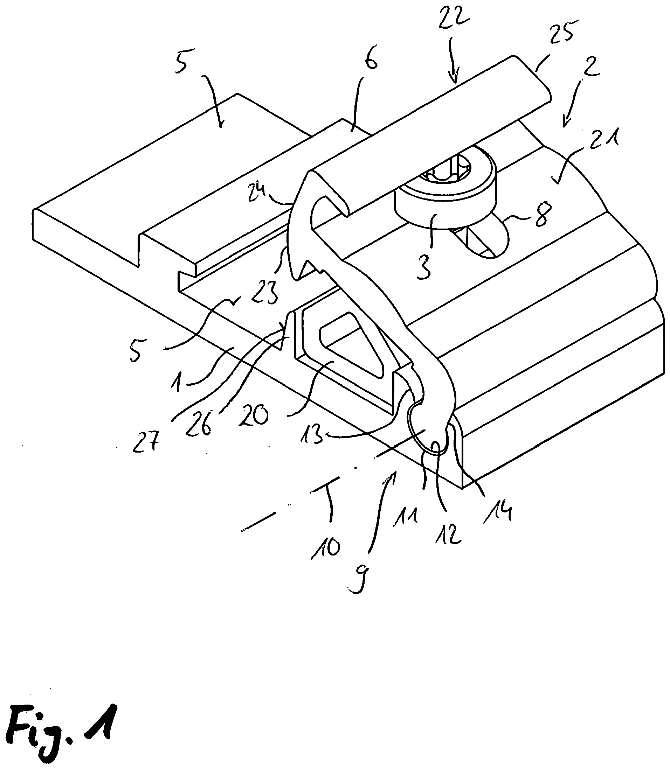

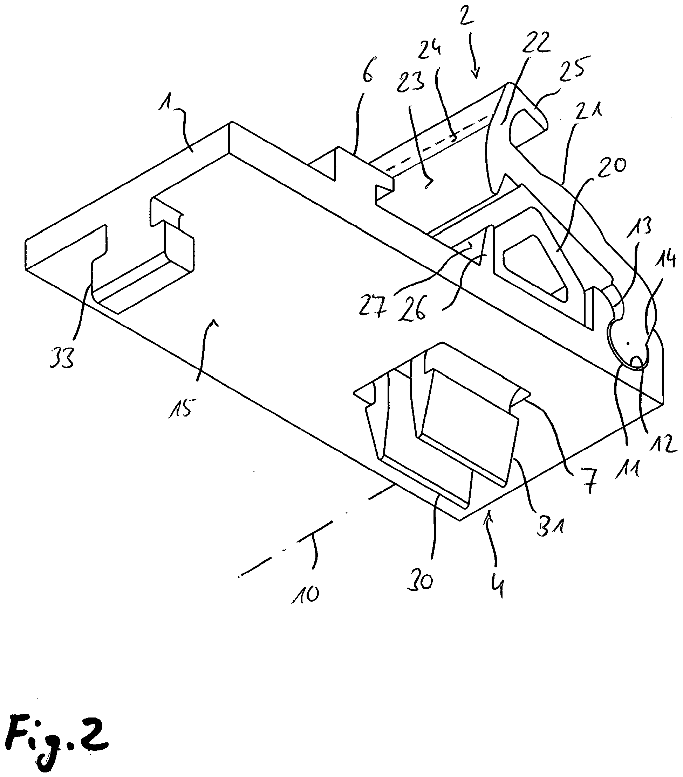

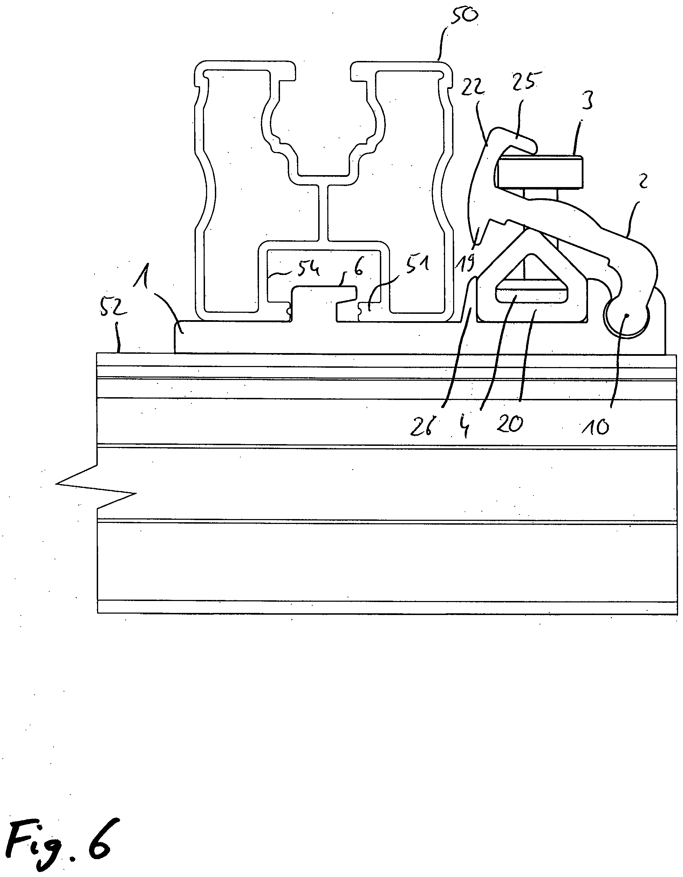

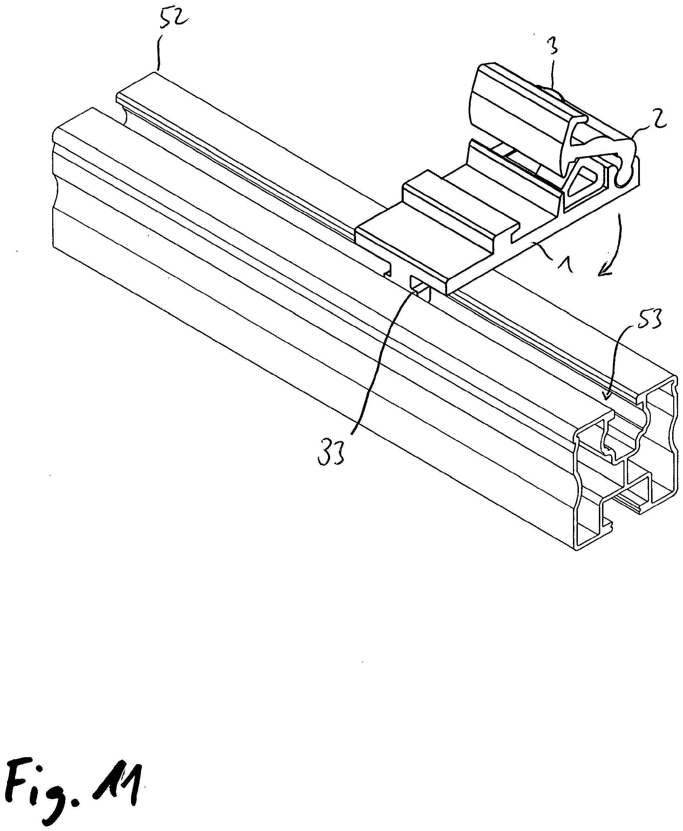

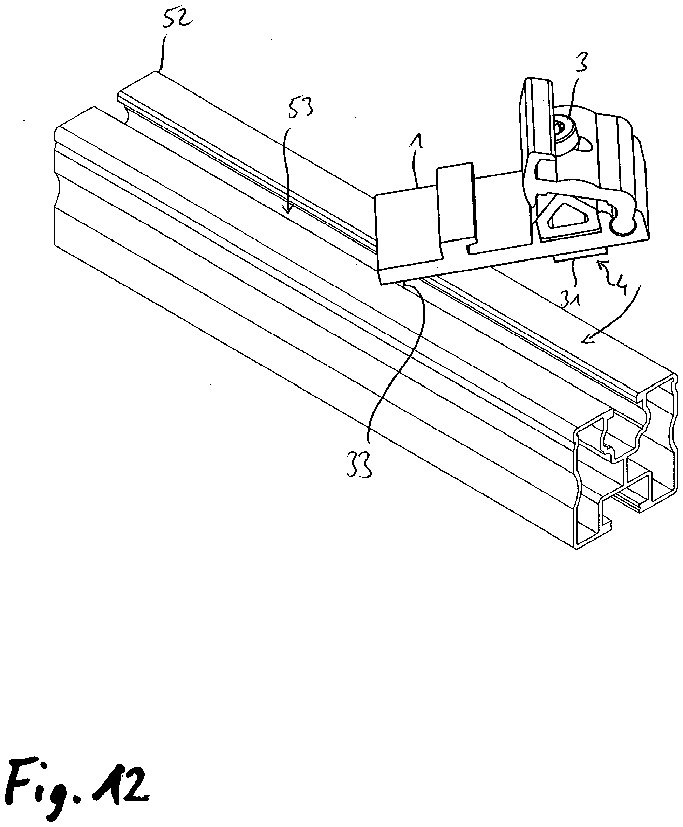

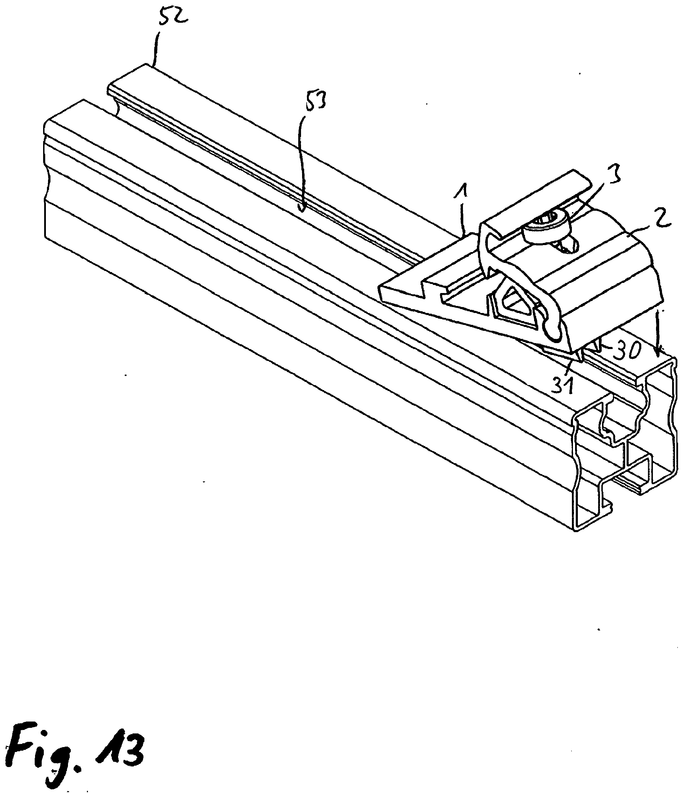

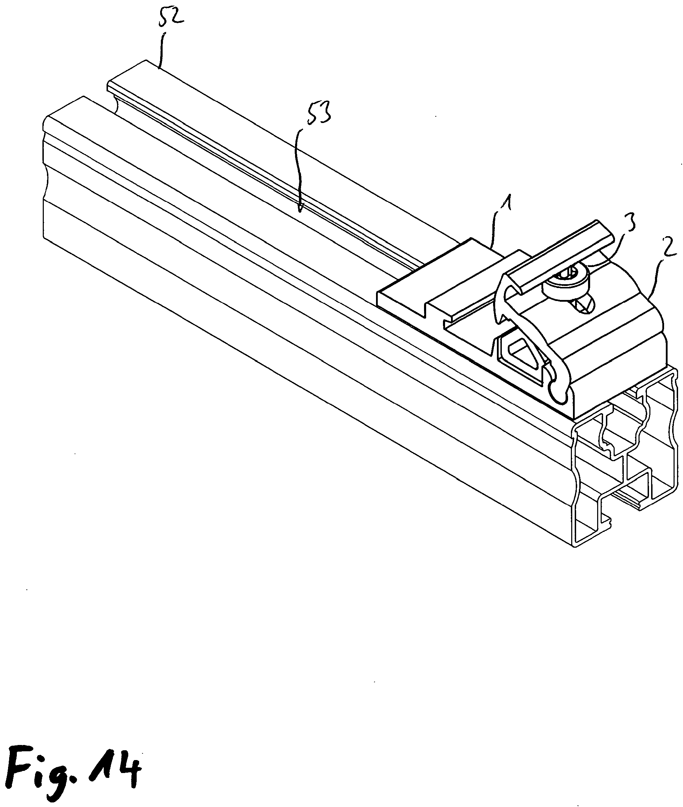

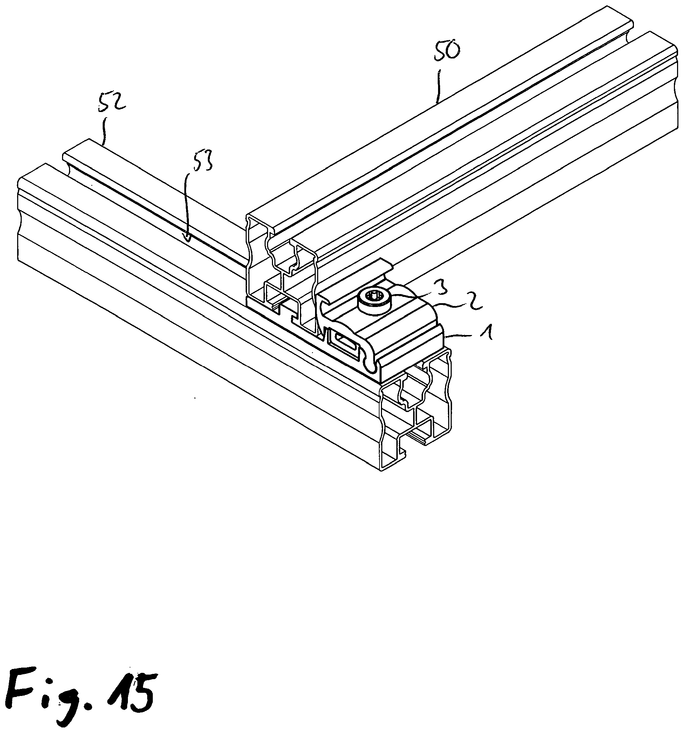

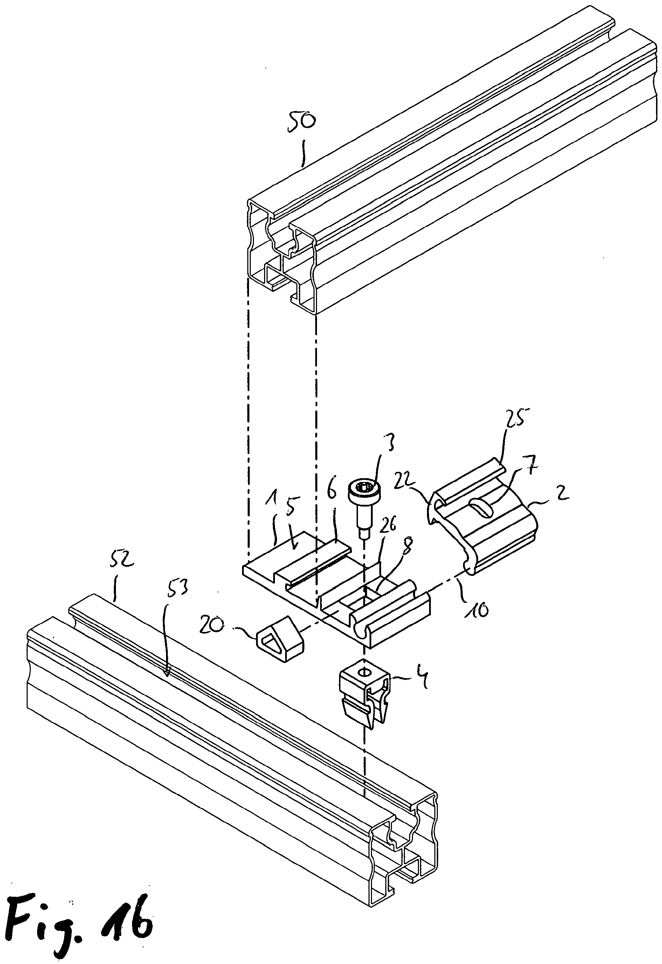

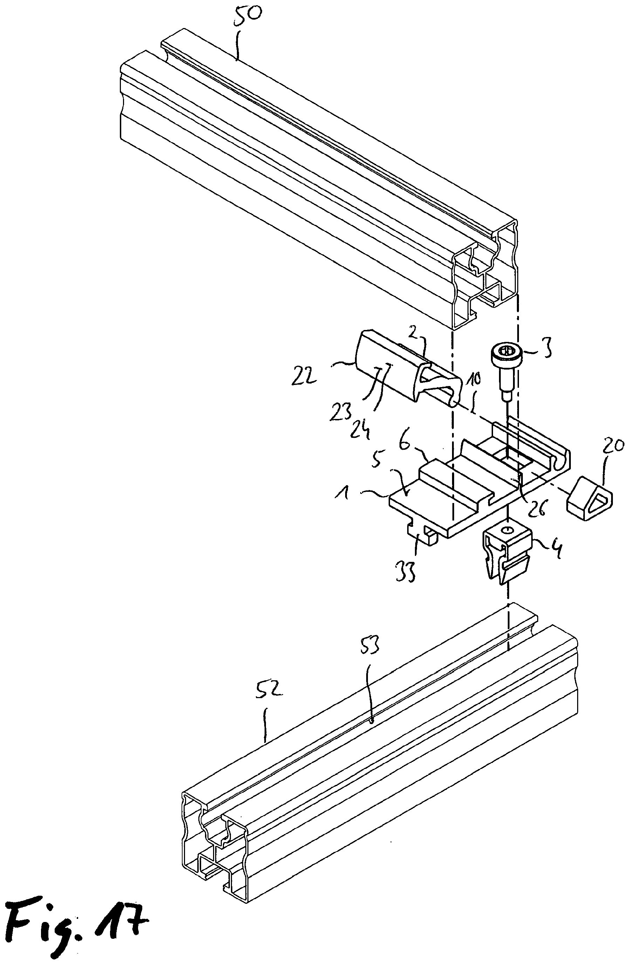

Der in **Fig. 1** bis **Fig. 17** dargestellte Halter ist zum Festklemmen einer Profilschiene **50** vorgesehen und weist einen Grundkörper **1**, ein Klemmelement **2** und eine Schraubverbindung **3, 4** auf. Der Grundkörper **1,** das Klemmelement **2** und das erste Ankerelement **4** sind jeweils homogen einstückig ausgeführt und weisen jeweils eine extrudierbare Grundform auf. Der Grundkörper **1** weist eine Auflagefläche **5** auf, die zum Auflegen der Profilschiene **50** vorgesehen ist. Die Profilschiene **50** enthält eine hinterschnittenen Nut **54** mit dem Halterand **51.** Der Grundkörper **1** weist außerdem eine Niederhalteleiste **6** auf, die zum Niederhalten des Halterands **51** der Profilschiene **50** vorgesehen ist. Die Niederhalteleiste **6** steht von der Auflagefläche **5** ab und unterteilt die Auflagefläche **5** in zwei Teilflächen, die etwa gleich groß sind. Die Niederhalteleiste **6** enthält eine Aufnahmenut **16,** die zur Aufnahme des Halterands **51** der Profilschiene **50** vorgesehen ist. Die Aufnahmenut **16** ist in einer Richtung zu dem Klemmelement **2** offen.

Der Grundkörper **1** enthält eine erste Öffnung **7,** die rechteckig ist. Das Klemmelement **2** enthält eine zweite Öffnung **8,** die als Langloch ausgeführt ist, das quer zur der Niederhalteleist **6** verläuft. Die erste Öffnung **7** und die zweite Öffnung **8** liegen in einer Richtung senkrecht zu der Auflagefläche mehrheitlich übereinander. Die Schraubverbindung **3, 4** ist aus einer Kopfschraube **3** und einem ersten Ankerelement **4** zusammengesetzt. Die Schraubverbindung **3, 4** führt durch die zweite Öffnung **8** und die erste Öffnung **7** und ist mittels des ersten Ankerelements **4** an einer Tragschiene **52** fixierbar. Das Klemmelement **2** kann die Profilschiene **50** mittels der Schraubverbindung **3, 4** gegen den Grundkörper **1** klemmen, das heißt genauer gegen dessen Niederhalteleiste **6.**

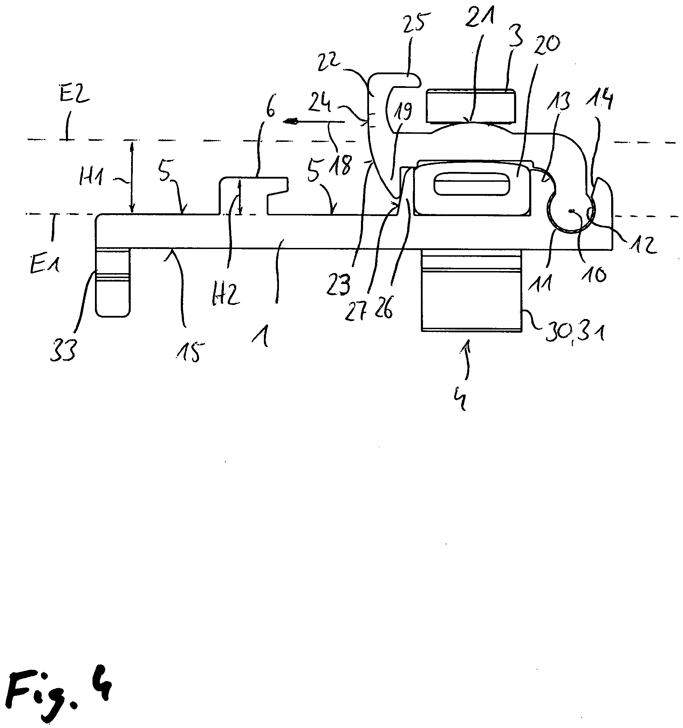

Charakteristisch ist, dass der Halter ein Drehgelenk **9** aufweist, und eine geometrische Drehachse **10** des Drehgelenks **9** parallel zu der Auflagefläche **5** und zu der Niederhalteleiste **6** verläuft. Die Drehachse **10** ist strichpunktiert dargestellt oder bei Draufsicht als Punkt zu erkennen. Wesentlich ist weiter, dass das Klemmelement **2** zwischen einer offenen Schwenkposition gemäß **Fig. 1** und einer geschlossenen Schwenkposition gemäß **Fig. 4** mittels des Drehgelenks **9** an dem Grundkörper **1** radial zu der Drehachse **10** geführt und außerdem gehalten ist. Das Klemmelement **2** kann dadurch vorzugsweise nur durch eine Translation in Richtung der Drehachse **10** mit dem Grundkörper **1** gefügt und ggf. wieder gelöst werden.

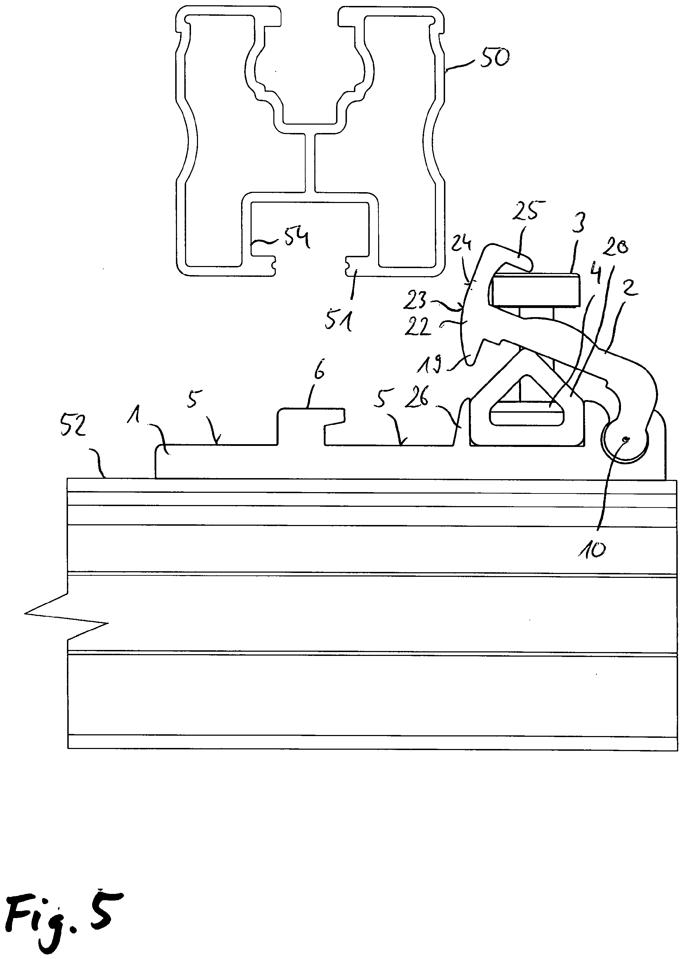

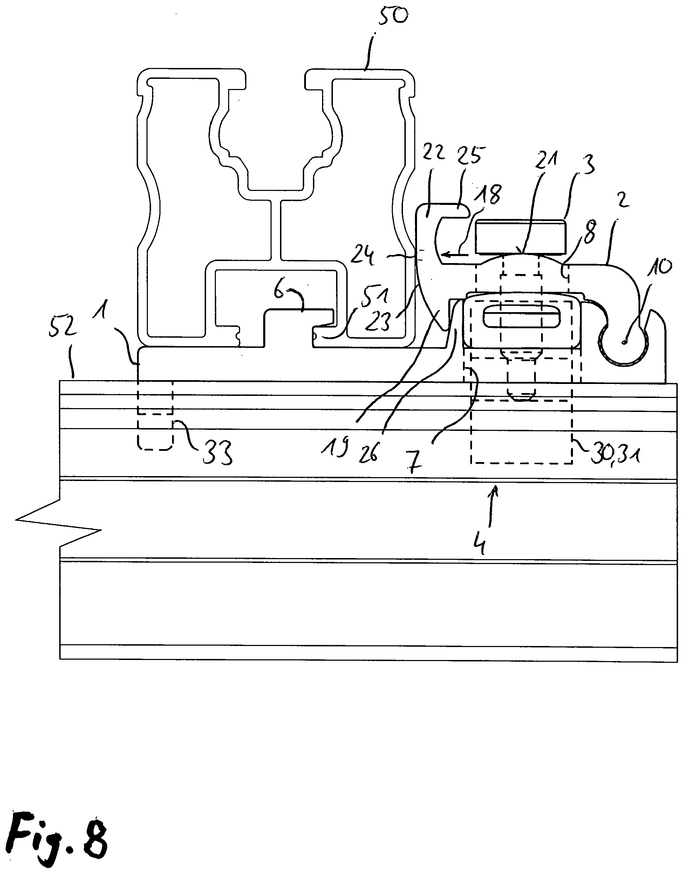

In der offenen Schwenkposition gemäß **Fig. 5** kann die Profilschiene **50** auf die Auflagefläche aufgelegt werden. In der geschlossenen Schwenkposition gemäß **Fig. 4** kann der Halterand **51** im Eingriff mit der Niederhalteleiste **6** stehen. Dadurch können die Niederhalteleiste **6** und damit die Profilschiene **50** fest gegen die Auflagefläche **5** niedergehalten sein, wie aus **Fig. 8** ersichtlich ist. In der geschlossenen Schwenkposition gemäß **Fig. 4** kann die Profilschiene **50** gegen den Grundkörper **1,** das heißt genauer gegen seinen Niederhalteleiste **6** geklemmt sein, wie ebenfalls aus **Fig. 8** ersichtlich ist. Hierbei wird der Halterand **51** gegen den Grund der Aufnahmenut **16** gedrückt.

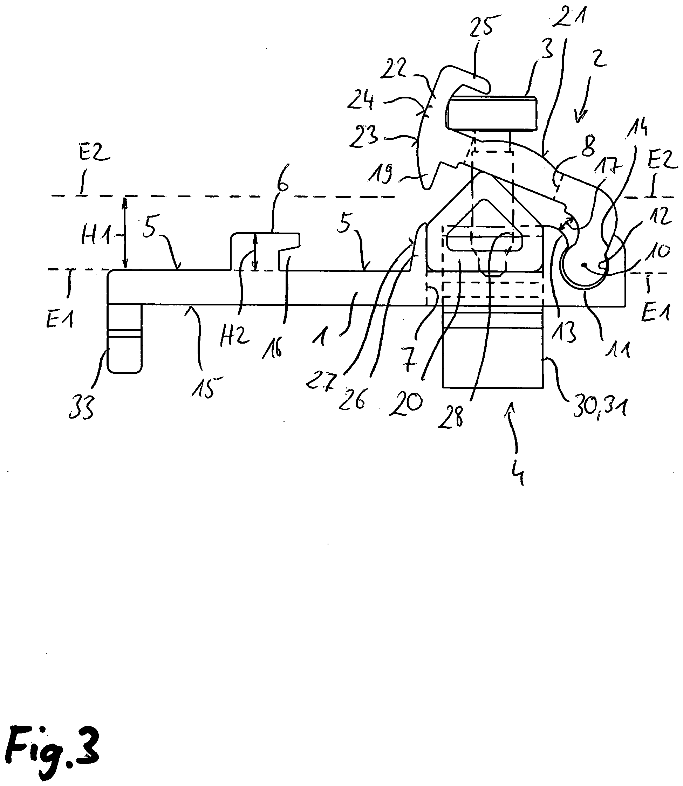

Das Drehgelenk **9** ist aus zwei Drehgelenkpartner **11** und **12** zusammengesetzt, wobei ein konkaver Drehgelenkpartner **11** an dem Grundkörper **1** integral vorgesehen ist und ein konvexer Drehgelenkpartner **12** an dem Klemmelement **2** integral vorgesehen ist. Der konkave Drehgelenkpartner **11** besitzt eine abschnittsweise hohlzylindrische Gestalt und der konvexe Drehgelenkpartner **12** besitzt eine abschnittsweise vollzylindrische Gestalt. Wie insbesondere aus **Fig. 3** und **Fig**. **4** zu erkennen ist, korrespondieren die Drehgelenkpartner **11** und **12** in ihrer Form, wobei ein geeignetes Lagerspiel vorgesehen ist. Die Drehgelenkpartner **11** und **12** sind wie die Drehachse **10** parallel zu der Niederhalteleiste **6** und der Auflagefläche **5** orientiert.

Wie aus **Fig**. **3** entnommen werden kann, ist bei einer Draufsicht auf die Auflagefläche **5** die erste Öffnung **7** zwischen der Niederhalteleiste **6** und der Drehachse **10** angeordnet. Außerdem verläuft die Drehachse **10** zwischen einer mit der Auflagefläche **5** zusammenfallenden erste Ebenen **E1** und einer dazu parallelen zweiten Ebene **E2,** wobei ein Abstand **H1** zwischen der ersten Ebene **E1** und der zweiten Ebene **E2** etwa gleich ist mit dem Zweifachen des größten Abstand **H2** der Niederhalteleiste **6** von der Auflagefläche **5** ist. Der Abstand **H1** kann auch kleiner sein als das Zweifache des Abstands **H2.** Mit anderen Worten ist der Lotabstand der Drehachse **10** zu der Auflagefläche **5** kleiner als das Zweifache des größten Lotabstandes der Niederhalteleiste **6** zu der Auflagefläche **5.** Im vorliegenden Ausführungsbeispiel ist die Drehachse **10** besonders nahe der ersten Ebenen **E1** vorgesehen, sodass eine dritte Ebene, die zu der Auflagefläche parallel ist und in der die Drehachse liegt, die Niederhalteleiste schneidet. Die Drehachse **10** und die Niederhalteleiste **6** befinden sich auf derselben Seite der Auflagefläche **5**

An dem Grundkörper sind zwei Drehanschläge **13** und **14** vorgesehen, die den Schwenkbereich **17** des Klemmelements **2** relativ zu dem Grundkörper **1** begrenzen. Der Drehanschlag **13** begrenzt den Schwenkbereich **17** in schließender Drehrichtung und der Drehanschlag **14** in öffnender Drehrichtung. Beide Drehanschläge **13** und **14** grenzen an den konkaven Drehgelenkpartner **11** an dem Grundkörper **1** an. Auch der weiter unten beschriebene Gegenhalter **26** wirkt zugleich als Drehanschlag in schließender Drehrichtung. Der Schwenkbereich **17** beträgt ungefähr 22 Grad.

Der Halter weist ein elastisches Mittel **20** auf, dass als Gummikörper ausgeführt ist. Das elastische Mittel **20** drückt das Klemmelement **2** in die offene Schwenkposition gemäß **Fig. 3****.** Diese Vorspannung bewirkt, dass ein eventuell vor dem Auflegen der Profilschiene **50** bereits niedergeschwenktes Klemmelement **2** selbsttätig wieder in Richtung zu der offenen Schwenkposition gedrängt wird. Das elastische Mittel **20** ist direkt zwischen dem Grundkörper **1** und dem Klemmelement **2** eingebracht und beaufschlagt diese unmittelbar. Das als Gummikörper ausgeführter elastische Mittel **20** wird während des Niederschwenkens aus der offenen Schwenkposition in die geschlossene Schwenkposition komprimiert. Im vorliegenden Ausführungsbeispiel weist der Gummikörper einen etwa dreieckigen Hohlquerschnitt auf.

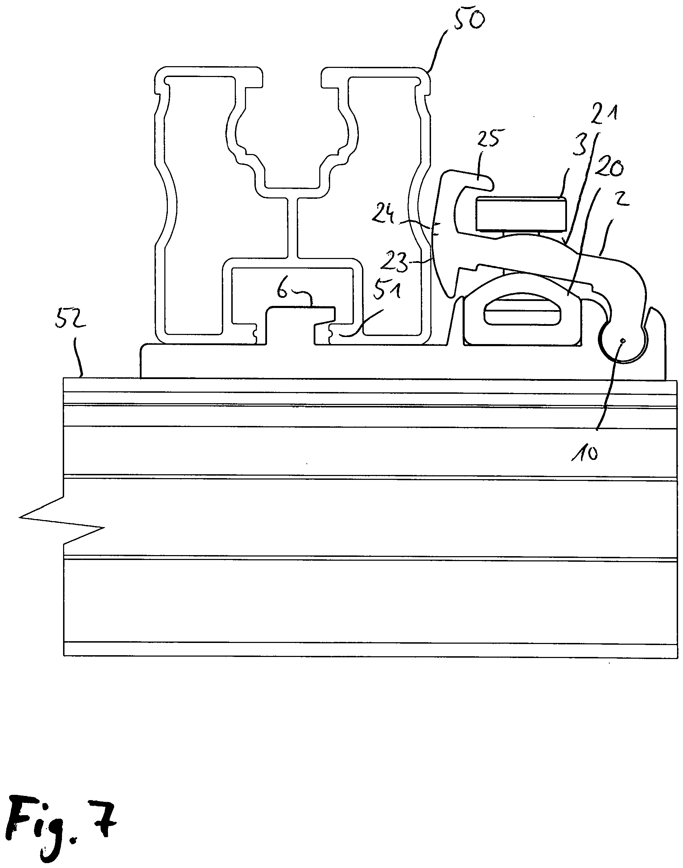

Das Klemmelement **2** weist einen konvexen Abschnitt **21** aufweisen, an dem die Schraubverbindung **3, 4,** das heißt genauer die Kopfschraube **3** radial angreifen kann. Die Achse der Schraubverbindung **3, 4** ist radial zu dem konvexen Abschnitt **21.** Der konvexe Abschnitt **21** ist an der von der ersten Öffnung **7** abgewandten Oberseite des Klemmelements **2** im Bereich um die zweite Öffnung **8** vorgesehen. Der Schraubenkopf **3** kann zum Ende des Niederschwenkens mit seiner geraden Unterseite tangential an dem konvexen Abschnitt **21** anliegen, wie aus **Fig. 7** und **Fig. 8** ersichtlich ist. Dadurch wir die Schraubenverbindung **3, 4** ausschließlich axial belastet. Der konvexe Abschnitt **21** um die zweite ist in der Richtung parallel zu der Drehachse **10** gerade ausgeführt.

Das Klemmelement weist ein schild- oder hammerkopfförmig Stirnende **22** auf, das zum unmittelbaren Beaufschlagen der Profilschiene **1** vorgesehen ist, das heißt genauer einer zur Auflagefläche **5** senkrechten Außenseite der Profilschiene **1.** Mit dem Stirnende **22** wird die Profilschiene **1** gegen die Niederhalteleiste **6** beaufschlagt und zwar in einer zur Auflagefläche parallelen Richtung. Wesentlich ist, dass das Stirnende **22** einen konvex gerundeten Gleitbereich **23** aufweist, der bei einem Niederschwenken des Klemmelements **2** an der Profilschien **2** entlang gleitet. Der konvex gerundet Gleitbereich **23** wirkt insbesondere als Fügehilfe. Das Stirnende weist außerdem eine Anlagebereich **24** auf, der in der geschlossenen Schwenkposition senkrecht zu der Auflagefläche **5** ist. Der Anlagebereich **24** ist in diesem Ausführungsbeispiel plan ausgeführt und geht in den konvex gerundeten Gleitbereich **23** tangential über. Wie aus **Fig. 8** zu erkennen ist, ist der Anlagebereich **24** derjenige Abschnitt des Stirnendes **22** der in der geschlossenen Schwenkposition an der Profilschiene **1,** das heißt genauer an der zur Auflagefläche **5** senkrechten Außenseite der Profilschiene **1** wirksam und unmittelbar anliegt. Mittels dieses Anlagebereiches **24** wird die Profilschiene **1** somit gegen die Niederhalteleiste geklemmt.

Das Klemmelement **2** weist eine als Fixierung **25** auf, das die Schraubverbindung **3, 4** bei einem Niederschwenken des Klemmelements **2** mitführt. Die Fixierung **25** ist am Stirnende **22** angeordnet und als einfacher Niederhalter ausgeführt, der den Kopf der Kopfschraube **3** beim Niederschwenken des Klemmelements **2** mit nach unten führt.

Am Grundkörper **1** ist ein Gegenhalter **26** vorgesehen, mittels dem das Klemmelement **2** entgegen der Klemmrichtung **18** abstützbar ist, wobei das Klemmelement **2** erst bei einem Niederschwenken des Klemmelements **2** in Anlage mit dem Gegenhalter **26** gelangt. Das Klemmelement **2** weist heirfür einen Fortsatz **19** am Stirnende **22** auf. Der Fortsatz **19** gelangt mit dem Gegenhalter **26** auf einer der Niederhalteleiste **6** zugewandten Seite des Gegenhalters **26** in Anlage. Die Klemmrichtung **18** ist parallel zu der Auflagefläche und von der Drehachse **10** zu der Niederhalteleiste **6** gerichtet. Der Gegenhalter **26** ist linear als starre Leiste ausgeführt und steht wie die Niederhalteleiste **6** von der Auflagefläche **5** ab. Wesentlich ist, dass der Gegenhalter **26** parallel zu der Niederhalteleiste **6** verläuft. Wesentlich ist, dass der Gegenhalter **26** eine etwaige Translation des Klemmelements **2** gegen die Klemmrichtung **18** blockiert oder zumindest hemmt. Der Gegenhalter **26** ist zwischen der Halteleiste **6** und der ersten Öffnung **7** angeordnet. Im oberen Endbereich des Gegenhalters **26** ist eine Fügeschräge vorhanden, das Inanlagegelangen mit dem Klemmelement **2** erleichtert.

An dem Gegenhalter **26** ist eine zur Niederhalteleiste **6** zeigende Spannschräge **27** vorgesehen, die das Klemmelement **2** bei einem Niederschwenken in die Klemmrichtung **18** zwingt. Der Fortsatz **19** gleitet bei Niederschwenken auf der Spannschräge **27** entlang und wird bei Annäherung an die geschlossene Schwenkposition zunehmen in die Klemmrichtung **18** gezwungen. Dazu ist es zweckmäßig, wenn die Drehgelenkpartner **11** und **12** ein radiales Lagerspiel zueinander haben, das eine solche Translation erlaubt. Der Weg des Kraftflusses vom Klemmelement **2** in den Grundkörper **1** wird dadurch wesentlich verkürzt und muss nicht mehr ausschließlich über das Drehgelenk **9** erfolgen.

Das Klemmelement **2** ist winklig, das heißt genauer etwa rechtwinklig ausgeführt, sodass zwischen der ersten Öffnung **7** und der zweiten Öffnung **8** ein Zwischenraum gebildet ist. So enthält das Klemmelement **2** - bezogen auf die geschlossenen Schwenkposition und auf die Auflagefläche **5** - einen senkrechten Abschnitt, der zum Drehgelenkpartner **12** führt, und einen waagrechten Abschnitt, der die zweite Öffnung **7** enthält, den konvexen Abschnitt trägt und schließlich zu dem Stirnende **22** führt. In dem Zwischenraum ist das elastische Mittel **20** angeordnet. Außerdem ist in dem Zwischenraum das erste Ankerelement **4** teilweise aufgenommen.

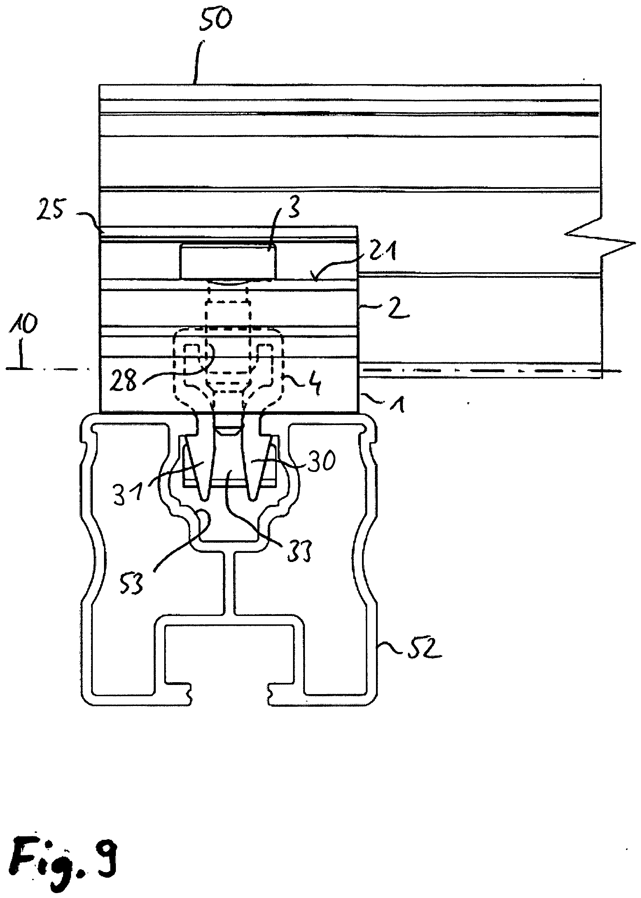

Wie insbesondere **Fig. 9** zeigt weist das erste Ankerelement **4** zwei entgegengesetzt nach außen gerichtete Schnapphaken **30** und **31** auf, die zum Hintergreifen einer hinterschnittenen Nut **53** in der Tragschiene **52** vorgesehen sind. Das erste Ankerelement **4** weist außerdem ein Innengewinde **28** auf, das mit der Kopfschraube **3** im Gewindeeingriff steht. Die Schnapphaken **30** und **31** weisen Einführschrägen auf, um das erste Ankerelement **4** einfacher in die hinterschnittene Nut **53** eindrücken zu können. Das erste Ankerelement **4** weist im Bereich des Innengewinde **28** einen quadratischen Außenquerschnitt auf und ist in der ersten Öffnung **7** verdrehsicher gehalten. Vorzugsweise wird das Innengewinde **28** mittels der Kopfschraube **3** in das erste Ankerelement **4** eingebracht. Hierzu kann die Kopfschraube **3** ein nicht näher dargestellten selbstschneidendes Gewinde aufweisen. Wesentlich für eine hohe Festigkeit ist, dass die Kopfschraube **3** zugleich als Gegenhalter für die Schnapphaken **30** und **31** wirken kann, wie aus **Fig. 9** ersichtlich ist. Beim Anziehen der Kopfschraube **3** gelangt diese zwischen die Schnapphaken **30** und **31** und blockiert ein etwaiges Zueianderbewegen, wodurch ein Lösen des Ankerelement **4** ausgeschlossen werden kann.

Der Grundkörper **1** weist eine Rückseite **15** auf, die von der Auflagefläche abgewandt ist und zur Anlage an der Tragschiene **52** vorgesehen ist. Von der Rückseite **15** steht ein zweites Ankerelement **33** ab, das zum Hintergreifen der hinterschnittenen Nut **53** in der Tragschiene **52** vorgesehen ist. Das zweite Ankerelement **33** ist starr und T-förmig. Wesentlich ist, dass das zweite Ankerelement **33** in dieselbe hinterschnittene Nut **53** eingreifen kann wie das erste Ankerelement **4.**

Aus **Fig. 5** bis **Fig. 8** ist ersichtlich, dass die Profilschiene **1** zunächst auf die Auflagefläche **5** des auf der Tragschiene **52** bereits vorpositionierten Halters aufgelegt wird, wobei die Niederhalteleiste **6** und der Halterand **51** in Gegenüberlage gelangen. Anschließend wir die Kopfschraube **3** betätigt, wodurch das Klemmelement **2** niedergeschwenkt wird die Profilschiene **1** mittels des Klemmelements **2** gegen die Niederhalteleiste **6** geklemmt wird und außerdem der Halterand **51** weiter in Eingriff mit der Niederhalteleiste **6** gelangt. Während des Niederschwenkens des Klemmelements **2** beziehungsweise während des Klemmvorgangs wird die Profilschiene **1** auf der Auflagefläche **5** parallel verschoben, bis die Profilschiene an der Niederhalteleiste **6** anschlägt und gegen diese beaufschlagt wird. Während des parallelen Verschiebens gelangt der Halterand **51** in Eingriff mit der Niederhalteleiste **6.** Mit zunehmenden Erreichen der geschlossenen Schwenkposition wird die Profilschiene zunehmend gegen die Niederhalteleiste **6** gedrückt.

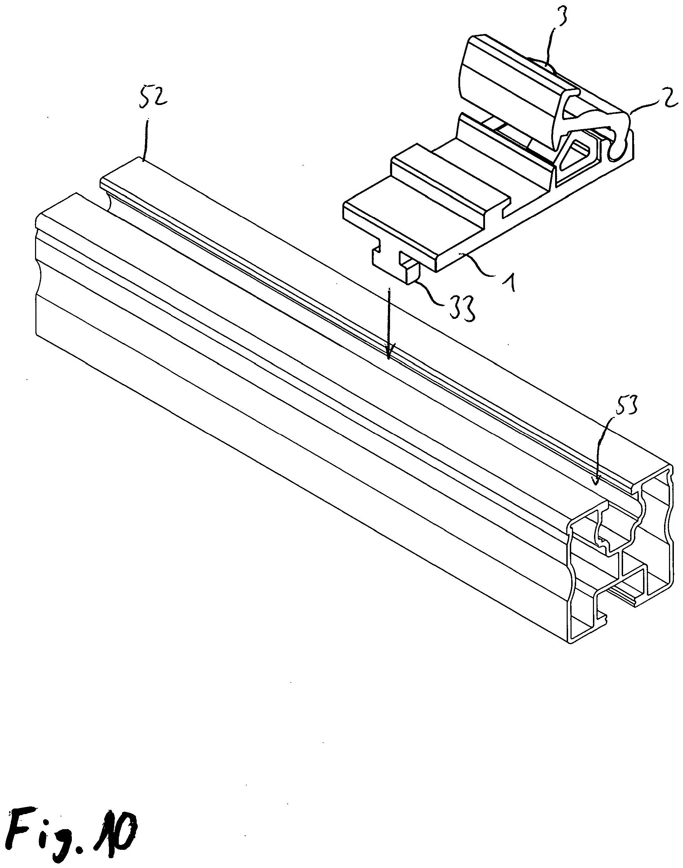

Aus **Fig. 10** bis **Fig. 15** ist ersichtlich, dass zum Vorfixieren des Halters auf der Tragschiene **52** folgende Montageschritte vorzunehmen sind: a) Einsetzen des zweiten Ankerelements **33** in die hinterschnittene Nut **53,** b) Bewegen des Halters dergestalt, dass das erste Ankerelement **4** in dieselbe hinterschnittene Nut **53** ragt, wobei zugleich das zweite Ankerelement **33** die hinterschnittenen Nut **53** zunehmend hintergreift, und c) Niederschwenken des Klemmelements **2** mit Eindrücken des ersten Ankerelements **4** in die hinterschnittene Nut **53.** Das Eindrücken erfolgt soweit, bis das erste Ankerelement **4** die hinterschnittenen Nut **53** vollständig hintergreift. Das Eindrücken des ersten Ankerelements **4** erfolgt mittels der Fixierung, die die Kopfschraube **3** mit führt.

## Patentansprüche

1. Halter für eine Profilschiene, wobei
- der Halter einen Grundkörper **(1),** ein Klemmelement **(2)** und eine Schraubverbindung **(3, 4)** aufweist,
- der Grundkörper **(1)** eine Auflagefläche **(5)** aufweist zum Auflegen der Profilschiene **(50),** und der Grundkörper **(1)** eine Niederhalteleiste **(6)** aufweist zum Niederhalten eines Halterands **(51)** der Profilschiene **(50)** gegen die Auflagefläche **(5),**
- der Grundkörper **(1)** eine erste Öffnung **(7)** enthält, und das Klemmelement **(2)** eine zweite Öffnung **(8)** enthält, und die Schraubverbindung **(3, 4)** durch die zweite Öffnung **(8)** und die erste Öffnung **(7)** führt und an einem Trägerbauteil **(52)** fixierbar ist, und
- das Klemmelement **(2)** die Profilschiene **(50)** mittels der Schraubverbindung **(3, 4)** gegen den Grundkörper **(1)** klemmen kann,
**dadurch gekennzeichnet, dass**
- der Halter **(1)** ein Drehgelenk **(9)** aufweist, und eine Drehachse **(10)** des Drehgelenks **(9)** parallel zu der Auflagefläche **(5)** und zu der Niederhalteleiste **(6)** verläuft, und
- das Klemmelement **(2)** zwischen einer offenen Schwenkposition und einer geschlossenen Schwenkposition mittels des Drehgelenks **(9)** an dem Grundkörper (**1**) radial zu der Drehachse **(10)** geführt ist, wobei der Halter ein elastisches Mittel **(20)** enthält, das das Klemmelement **(2)** in eine Richtung zu der offenen Schwenkposition drängt.

2. Halter nach Anspruch 1, **dadurch gekennzeichnet, dass** bei einer Draufsicht auf die Auflagefläche **(5)** die erste Öffnung **(7)** zwischen der Niederhalteleiste **(6)** und der Drehachse **(10)** angeordnet ist.

3. Halter nach Anspruch 1, **dadurch gekennzeichnet, dass** die Drehachse **(10)** zwischen einer mit der Auflagefläche **(5)** zusammenfallenden erste Ebenen (**E1**) und einer dazu parallelen zweiten Ebene **(E2)** verläuft, wobei ein Abstand (**H1**) zwischen der ersten Ebene (**E1**) und der zweiten Ebene **(E2)** kleiner oder gleich ist als das Zweifache des größten Abstand **(H2)** der Niederhalteleiste **(6)** von der Auflagefläche **(5).**

4. Halter nach Anspruch 1, **dadurch gekennzeichnet, dass** das Klemmelement **(2)** einen konvexen Abschnitt **(21)** aufweist, an dem die Schraubverbindung **(3)** radial angreifen kann.

5. Halter nach Anspruch 1, **dadurch gekennzeichnet, dass** das Klemmelement **(2)** ein Stirnende **(22)** aufweist zur Anlage an die Profilschiene, und das Stirnende **(22)** einen konvex gerundeten Gleitbereich **(23)** enthält, der bei einem Niederschwenken des Klemmelements **(2)** an der Profilschiene (1) gleiten kann.

6. Halter nach Anspruch 1, **dadurch gekennzeichnet, dass** das Klemmelement **(2)** ein Stirnende **(22)** aufweist zur Anlage an die Profilschiene **(1),** und das Stirnende **(22)** einen Anlagebereich **(24)** enthält, der in der geschlossenen Schwenkposition senkrecht zu der Auflagefläche **(5)** ist.

7. Halter nach Anspruch 1, **dadurch gekennzeichnet, dass** das Klemmelement **(2)** eine Fixierung **(25)** aufweist, das die Schraubenverbindung **(3, 4)** bei einem Niederschwenken des Klemmelements **(2)** mitführt.

8. Halter nach Anspruch 1, **dadurch gekennzeichnet**, das der Grundkörper (**1**) einen Gegenhalter **(26)** aufweist, mittels dem das Klemmelement **(2)** entgegen einer Klemmrichtung **(18)** abstützbar ist, wobei das Klemmelement **(2)** bei einem Niederschwenken des Klemmelements **(2)** in Anlage mit dem Gegenhalter **(26)** gelangt.

9. Halter nach dem vorhergehenden Anspruch, **dadurch gekennzeichnet, dass** an dem Gegenhalter **(26)** und/oder an dem Klemmelement **(2)** eine Spannschräge **(27)** vorgesehen ist, die das Klemmelement **(2)** bei einem Niederschwenken in Klemmrichtung **(18)** beaufschlagt.

10. Halter nach Anspruch 1, **dadurch gekennzeichnet, dass** das Klemmelement **(2)** winklig ausgeführt ist dergestalt, dass zwischen der ersten Öffnung **(7)** und der zweiten Öffnung **(8)** ein Zwischenraum gebildet ist.

11. Halter nach Anspruch 1, **dadurch gekennzeichnet, dass** die Schraubverbindung **(3, 4)** eine Schraube **(3)** und ein erstes Ankerelement **(4)** aufweist, und das erste Ankerelement **(4)** zwei entgegengesetzt nach außen gerichtete Schnapphaken **(30, 31)** aufweist zum Hintergreifen einer Öffnung **(53)** in dem Trägerbauteil **(52),** und das erste Ankerelement **(4)** ein Innengewindemittel **(28)** aufweist, mit dem die Schraube **(3)** im Gewindeeingriff steht.

12. Halter nach Anspruch 1, **dadurch gekennzeichnet, dass** der Grundkörper **(1)** eine Rückseite **(15)** aufweist, die von der Auflagefläche **(5)** abgewandt ist, und ein zweites Ankerelement **(33)** vorgesehen ist, das von der Rückfläche **(15)** absteht und zum Hintergreifen einer Öffnung **(53)** in dem Trägerbauteil **(52)** vorgesehen ist.

13. Montageverfahren zum Vorfixieren eines Halters gemäß einem der Ansprüche 11 und 12 an einem Trägerbauteil **(52)** mit einem hintergreifbaren Schlitz **(53),** mit den Schritten:
- Einsetzen des zweiten Ankerelements **(33)** in den hintergreifbaren Schlitz (**53**),
- Bewegen des Halters dergestalt, dass das erste Ankerelement **(4)** in den hintergreifbaren Schlitz **(53)** ragt, wobei das zweite Ankerelement **(33)** den hintergreifbaren Schlitz **(53)** hintergreift,
- Niederschwenken des Klemmelements **(2)** mit Eindrücken des ersten Ankerelements **(4)** in den hintergreifbaren Schlitz **(53).**

14. Montageverfahren nach Anspruch 13, **dadurch gekennzeichnet, dass** nach dem Niederschwenken das Klemmelement **(2)** durch das elastische Mittel **(20)** selbsttätig aufschwenkt.

## Claims

1. A holder for a profiled rail, wherein
- the holder comprises a main body **(1),** a clamping element **(2)** and a screw connection **(3, 4),**
- the main body **(1)** comprises a supporting surface **(5)** which is provided for placing the profiled rail **(50)** on, and the main body **(1)** comprises a holding-down strip **(6)** for holding down a holding edge **(51)** of the profiled rail **(50)** against the supporting surface **(5),**
- the main body **(1)** contains a first opening **(7),** and the clamping element **(2)** contains a second opening **(8),** and the screw connection **(3, 4)** leads through the second opening **(8)** and the first opening **(7)** and is fixable on a carrier component **(52),** and
- the clamping element **(2)** can clamp the profiled rail **(50)** against the main body (**1**) by means of the screw connection **(3, 4),**
**characterized in that**
- the holder comprises a rotary joint **(9),** and an axis of rotation (**10**) of the rotary joint **(9)** runs parallel to the supporting surface **(5)** and to the holding-down strip **(6),** and
- the clamping element **(2)** is guided radially with respect to the axis of rotation (10) between an open pivoted position and a closed pivoted position by means of the rotary joint **(9)** on the main body **(1),** wherein the holder comprises an elastic means **(20),** which urges the clamping element **(2)** in direction to the open pivoted position.

2. Holder according to claim 1, **characterized in, that** in a top view of the supporting surface **(5),** the first opening **(7)** is arranged between the holding-down strip **(6)** and the axis of rotation **(10).**

3. Holder according to claim 1, **characterized in, that** the axis of rotation **(10)** runs between a first plane **(E1)** coinciding with the supporting surface **(5)** and a second plane **(E2)** parallel to said first plane (**E1**), wherein a distance (**H1**) between the first plane **(E1)** and the second plane **(E2)** is smaller than or equal to twice the largest distance **(H2)** of the holding-down strip **(6)** from the supporting surface **(5).**

4. Holder according to claim 1, **characterized in, that** the clamping element **(2)** has a convex section **(21)** on which the screw connection **(3)** can act radially.

5. Holder according claim 1, **characterized in, that** the clamping element **(2)** comprises a front end **(22)** for abutting on the profiled rail, and the front end **(22)** comprises a convexly rounded sliding region **(23)** which, when the clamping element **(2)** is pivoted down, can slide on the profiled rail **(1).**

6. Holder according to claim 1, **characterized in, that** the clamping element **(2)** comprises a front end **(22)** for abutting on the profiled rail **(1),** and the front end **(22)** comprises an abutting region **(24)** which, in the closed pivoted position, is perpendicular to the supporting surface **(5).**

7. Holder according to claim 1, **characterized in, that** the clamping element **(2)** has a fixing means **(25)** which carries the screw connection **(3, 4)** when the clamping element **(2)** is pivoted down.

8. Holder according to claim 1, **characterized in, that** the main body **(1)** comprises a counter holder **(26),** by means of the counter holder **(26)** the clamping element **(2)** can be supported opposite to a clamping direction **(18),** wherein the clamping element **(2)** comes into contact with the counter holder **(26)** when the clamping element **(2)** is pivoted down.

9. Holder according to the preceding claim, **characterized in, that** a clamping slant **(27)** is provided on the counter holder **(26)** and/or on the clamping element **(2),** the clamping slant **(27)** forcing the clamping element **(2)** in the clamping direction **(18)** when pivoted down.

10. Holder according to claim 1, **characterized in, that** the clamping element **(2)** is of angular design in such a manner, that an intermediate space is formed between the first opening **(7)** and the second opening **(8).**

11. Holder according to claim 1, **characterized in, that** the screw connection **(3, 4)** comprises a screw **(3)** and a first anchoring element **(4),** and the first anchoring element **(4)** comprises two snap-action hooks **(30, 31),** which are directed outward in an opposed manner, for engaging behind an opening **(53)** in the carrier component **(52),** and the first anchoring element **(4)** comprises an internal thread means **(28)** with which the screw **(3)** is in threaded engagement.

12. Holder according to claim 1, **characterized in, that** the main body **(1)** comprises a rear side **(15)** which faces away from the supporting surface **(5),** and a second anchoring element **(33)** is provided, which anchoring element **(33)** protrudes from the rear surface **(15)** and is provided for engaging behind an opening **(53)** in the carrier component **(52).**

13. Installation method for prefixing a holder according to one of the claims 11 and 12 on a carrier component **(52)** having a slot **(53)** which can be engaged behind, with the following steps:
- inserting the second anchoring element **(33)** into the slot **(53),**
- moving the holder in such a manner, that the first anchoring element **(4)** projects into the slot **(53),** wherein the second anchoring element **(33)** engages behind the slot **(53),**
- pivoting the clamping element **(2)** down with the first anchoring element **(4)** being pressed into the slot **(53).**

14. Installation method according to claim 13, **characterized in, that**, after the pivoting-down operation, the clamping element **(2)** automatically pivots up by means of the elastic means **(20).**

## Revendications

1. Support pour rail profilé,
- ce support présentant un corps de base (1), un élément de serrage (2) et un assemblage fileté (3, 4),
- le corps de base (1) présentant une surface d'appui (5) destinée à recevoir un rail profilé (50), et le corps de base (1) présentant une barre serre-flanc (6) destinée à maintenir plaqué contre la surface d'appui (5) un bord de retenue (51) du rail profilé (50),
- le corps de base (1) comportant une première ouverture (7), et l'élément de serrage (2) une deuxième ouverture, et l'assemblage fileté (3, 4) passant par la deuxième ouverture (8) et par la première ouverture (7) et pouvant être fixé à un élément de support (52), et
- l'élément de serrage (2) pouvant maintenir le rail profilé (50) serré contre le corps de base (1) au moyen de l'assemblage fileté (3, 4),
**caractérisé en ce que**
- le support (1) présente une articulation pivotante (9), et un axe de pivotement (10) de l'articulation pivotante (9) s'étend parallèlement à la surface d'appui (5) et à la barre serre-flanc (6), et
- l'élément de serrage (2) est guidé sur le corps de base (1) de manière radiale par rapport à l'axe de pivotement (10) entre une position de pivotement ouverte et une position de pivotement fermée au moyen de l'articulation pivotante (9), le support comprenant un moyen élastique (20) qui pousse l'élément de serrage en direction de la position de pivotement ouverte.

2. Support selon la revendication 1, **caractérisé en ce que** dans une vue en plan de la surface d'appui (5), la première ouverture (7) est disposée entre la barre serre-flanc (6) et l'axe de pivotement (10).

3. Support selon la revendication 1, **caractérisé en ce que** l'axe de pivotement (10) s'étend entre un premier plan (E1) coïncidant avec la surface d'appui (5) et un deuxième plan (E2) parallèle à celui-ci, la distance (H1) entre le premier plan (E1) et le deuxième plan (E2) étant inférieure ou égale à deux fois la plus grande distance (H2) entre la barre serre-flanc (6) et la surface d'appui (5).

4. Support selon la revendication 1, **caractérisé en ce que** l'élément de serrage (2) présente une partie (21) convexe sur laquelle l'assemblage fileté (3) peut venir en prise de manière radiale.

5. Support selon la revendication 1, **caractérisé en ce que** l'élément de serrage (2) présente une extrémité frontale (22) destinée à venir prendre appui sur le rail profilé, et l'extrémité frontale (22) comporte une zone de glissement (23) arrondie de manière convexe pouvant glisser sur le rail profilé (1) lorsque l'élément de serrage (2) pivote vers le bas.

6. Support selon la revendication 1, **caractérisé en ce que** l'élément de serrage (2) présente une extrémité frontale (22) destinée à venir prendre appui sur le rail profilé (1) et l'extrémité frontale (22) comporte une zone d'appui (24) qui, dans la position de pivotement fermée, est perpendiculaire à la surface d'appui (5).

7. Support selon la revendication 1, **caractérisé en ce que** l'élément de serrage (2) présente une fixation (25) qu'entraîne l'assemblage fileté (3, 4) lors du pivotement vers le bas de l'élément de serrage (2).

8. Support selon la revendication 1, **caractérisé en ce que** le corps de base (1) présente un contre-support (26) au moyen duquel l'élément de serrage (2) peut prendre appui dans la direction de serrage opposée, l'élément de serrage (2) venant en butée contre le contre-support (26) lorsque l'élément de serrage (2) pivote vers le bas.

9. Support selon l'une des revendications précédentes, **caractérisé en ce qu'**il est prévu sur le contre-support (26) et/ou sur l'élément de serrage (2) un chanfrein de serrage (27) par lequel est sollicité l'élément de serrage (2) lors d'un pivotement vers le bas dans la direction de serrage (18).

10. Support selon la revendication 1, **caractérisé en ce que** l'élément de serrage (2) est réalisé angulairement de sorte qu'un espace intermédiaire est formé entre la première ouverture (7) et la deuxième ouverture (8).

11. Support selon la revendication 1, **caractérisé en ce que** l'assemblage fileté (3, 4) présente une vis (3) et un premier élément d'ancrage (4), et le premier élément d'ancrage (4) présente deux crochets d'encliquetage (30, 31) orientés opposés vers l'extérieur et destinés à venir en prise à l'arrière d'une ouverture (53) ménagée dans l'élément de support (52), et le premier élément d'ancrage (4) présente un moyen taraudé (28) avec lequel la vis (3) est en prise vissée.

12. Support selon la revendication 1, **caractérisé en ce que** le corps de base (1) présente une face arrière (15) qui est tournée à l'opposé de la surface d'appui (5), et **en ce qu'**il est prévu un deuxième élément d'ancrage (33) qui dépasse de la face arrière (15) et qui est destiné à venir en prise à l'arrière d'une ouverture (53) ménagée dans l'élément de support (52).

13. Procédé de montage pour la préfixation) d'un support selon l'une des revendications 11 et 12 sur un élément de support (52) pourvu d'une fente saisissable par derrière, comportant les étapes suivantes :
- l'introduction du deuxième élément d'ancrage (33) dans la fente (53) saisissable par l'arrière,
- le déplacement du support de manière que le premier élément d'ancrage (4) fait saillie de la fente (53) saisissable par l'arrière, le deuxième élément d'ancrage (33) étant en prise derrière la fente saisissable par l'arrière,
- le pivotement vers le bas de l'élément de serrage (2) et l'enfoncement du premier élément d'ancrage (4) dans la fente (53) saisissable par l'arrière.

14. Procédé de montage selon la revendications 13, **caractérisé en ce qu'**une fois pivoté vers le bas, l'élément de serrage (2) pivote de lui-même vers le haut à l'aide du moyen élastique (20).
